# EUROPÄISCHE PATENTSCHRIFT

(11) **EP 3 841 936 B1**
(45) Veröffentlichungstag und Bekanntmachung des Hinweises auf die Patenterteilung: **23.08.2023**
(21) Anmeldenummer: 20212479.8
(22) Anmeldetag: 08.12.2020
(51) Int. Cl.: A47J 31/44

(54) **VORRICHTUNG ZUR AUSGABE EINES GETRÄNKS MIT DRUCKEINRICHTUNG, DRUCKMODUL UND VERFAHREN ZUM BEDRUCKEN EINES GETRÄNKS**
DEVICE FOR DISPENSING A BEVERAGE COMPRISING A PRINTING DEVICE, A PRINTING MODULE AND A METHOD FOR PRINTING A BEVERAGE
DISPOSITIF DE DISTRIBUTION D'UNE BOISSON POURVU DE DISPOSITIF D'IMPRESSION, MODULE D'IMPRESSION ET PROCÉDÉ D'IMPRESSION D'UNE BOISSON

(30) Priorität: 23.12.2019 DE 102019220565
(43) Veröffentlichungstag der Anmeldung: 30.06.2021
(73) Patentinhaber: Coffee Colorato UG (haftungsbeschränkt), 48599 Gronau (DE)
(72) Erfinder: TORCIA, Angelo, 12163 Berlin (DE); TORCIA, Sandro, 48599 Gronau (DE)
(74) Vertreter: Maikowski & Ninnemann Patentanwälte Partnerschaft mbB

(56) Entgegenhaltungen:
- EP-A1- 3 424 376
- JP-A- 2010 160 692
- US-A1- 2019 008 314

## Beschreibung

Die vorgeschlagene Lösung betrifft insbesondere eine Vorrichtung zur Ausgabe eines Getränks.

Eine gattungsgemäße Vorrichtung zur Ausgabe eines Getränks umfasst insbesondere wenigstens eine Zubereitungseinrichtung für die Zubereitung des Getränks und eine Ausgabeeinrichtung mit wenigstens einer Ausgabeöffnung für die Ausgabe des Getränks. Als Beispiel für eine derartige Vorrichtung ist eine Kaffeemaschine, insbesondere ein Kaffeevollautomat bekannt, mit dem Kaffee zubereitet und ausgegeben werden kann. Weist ein entsprechender Kaffeevollautomat einen Milchtank und/oder einen Milchschäumer als Teil der Zubereitungseinrichtung auf, kann für das auszugebende Getränk auch Milch genutzt werden, beispielsweise um einen Cappuccino oder einen Latte macchiato zur Verfügung zu stellen.

Erst seit kurzem sind ferner Drucker bekannt, mit denen Getränke und insbesondere mit Milchschaum zubereitete Getränke bedruckbar sind. Als Druckmedium wird hierbei typischerweise Lebensmittelfarbe oder ein flüssiges Lebensmittel eingesetzt. Ein entsprechender Drucker wird beispielsweise von der Anmelderin unter Coloranino^{®} vertrieben. Ein vergleichbarer Drucker ist ferner aus der US 2017/0066252 A1 bekannt.

Aus der EP 3 424 376 A1 ist ferner ein Drucker bekannt, der zum druckähnlichen Aufbringen eines Milchschaums auf ein Getränk vorgesehen ist.

Bei den bisher bekannten und in der Praxis verwendeten Druckern wird das zuvor separat vorbereitete Getränk an dem Drucker platziert und nachfolgend mit einem gewünschten Motiv bedruckt. Es ist mithin notwendig, mehrere Geräte zu verwenden und das zu servierende, bedruckte Getränk in mehreren Prozessschritten zu bearbeiten.

Vor diesem Hintergrund liegt der angemeldeten Lösung daher die Aufgabe zugrunde, eine in dieser Hinsicht verbesserte Lösung bereitzustellen.

Diese Aufgabe ist sowohl mit einer Vorrichtung des Anspruchs 1 als auch einem Druckmodul des Anspruchs 10 gelöst.

Hierbei ist insbesondere eine Vorrichtung zur Ausgabe eines Getränks mit wenigstens einer Zubereitungseinrichtung und einer Ausgabeeinrichtung sowie zusätzlich mindestens einer Druckeinrichtung vorgeschlagen, mit der ein über die Ausgabeeinrichtung ausgegebenes Getränk bedruckbar ist.

Bei einer vorgeschlagenen Vorrichtung ist somit eine Druckeinrichtung integraler Bestandteil der Vorrichtung und mithin zusätzlich zu einer Zubereitungseinrichtung für die Zubereitung eines Getränks und einer Ausgabeeinrichtung mit wenigstens einer Ausgabeöffnung für die Ausgabe des Getränks als Teil der Vorrichtung vorgesehen. Auf diese Art und Weise lässt sich eine zusätzliche Druckfunktion in die zur Zubereitung des Getränks vorgesehene Vorrichtung integrieren. Ein Nutzer, zum Beispiel ein Theker, muss folglich nur ein Gerät bedienen, wodurch sich die Herstellungszeit eines bedruckten Getränks erheblich reduziert.

Über die mindestens eine Druckeinrichtung ist beispielsweise ein Getränk mit einem für Menschen genießbaren Druckmedium bedruckbar. Dies schließt beispielsweise eine für Menschen genießbare Druckflüssigkeit, insbesondere Lebensmittelfarbe und/oder flüssiges Lebensmittel ein. Mithilfe der Druckeinrichtung kann beispielsweise ein Motiv auf das ausgegebene Getränk aufdruckbar sein.

Beispielsweise ist die Zubereitungseinrichtung der vorgeschlagenen Vorrichtung für die Zubereitung eines Heißgetränks, wie zum Beispiel Kaffee, vorgesehen. Die Zubereitungseinrichtung umfasst hierfür dann beispielsweise wenigstens einen Behälter für Kaffeepulver und/oder ein Mahlwerk für Kaffeebohnen. Die Ausgabeeinrichtung kann alternativ oder ergänzend für die Ausgabe von Milchschaum vorgesehen sein. In diesem Zusammenhang kann dabei beispielsweise auch die Zubereitungseinrichtung einen Milchtank und/oder einen Milchschäumer für die Ausgabe von Milchschaum umfassen, der über die Druckeinrichtung mit einem Motiv bedruckbar ist.

In einer Ausführungsvariante ist die Druckeinrichtung zum Bedrucken von Motiven mit einer Auflösung von über 50 Punkten pro Zoll ("dots per inch") ausgebildet.

Beispielsweise umfasst die Druckeinrichtung mindestens einen translatorisch und/oder rotatorisch verstellbaren Druckkopf für das Bedrucken eines Getränks. Insbesondere kann der Druckkopf zur Ausführung einer Verstellung vorgesehen sein, bei der eine lineare Verstellbewegung und eine Drehbewegung über zumindest einen Teil eines zugelassenen Verstellwegs überlagert sind. Je nach Verstellmöglichkeit des Druckkopfes kann dieser für das Bedrucken des Getränks mit verschiedenen, vergleichsweise komplexen Motiven ausgebildet und vorgesehen sein.

In einer ersten erfindungsgemäßen Ausführungsform umfasst die Druckeinrichtung mindestens einen Druckkopf, der in einem wenigstens auch einen Teil der Ausgabeeinrichtung aufnehmenden Druckmodulgehäuse angeordnet ist. In dem Druckmodulgehäuse ist beispielsweise der Druckkopf verstellbar gelagert und zusätzlich wenigstens ein Teil der Ausgabeeinrichtung aufgenommen, sodass die Druckeinrichtung und wenigstens ein Teil der Ausgabeeinrichtung kompakt in einem gemeinsamen Druckmodulgehäuse untergebracht sind.

Für die kompakte und platzsparende Unterbringung der jeweiligen Komponenten in dem Druckmodulgehäuse ist mindestens eine die wenigstens eine Ausgabeöffnung bereitstellende Ausgabeeinheit der Ausgabeeinrichtung in dem Druckmodulgehäuse angeordnet. Dementsprechend ist in dem Druckmodulgehäuse nicht nur ein Druckkopf, sondern auch eine Ausgabeeinheit beispielsweise in Form eines Kaffeeauslaufs und/oder eines Milchauslaufs untergebracht.

Die mindestens eine Ausgabeeinheit für die Ausgabe eines Getränks ist dabei in dem Druckmodulgehäuse zwischen einer Ruheposition und einer Ausgabeposition verstellbar.

Hierüber ist beispielsweise erreichbar, dass der Druckkopf zum Bedrucken des Getränks an der mindestens einen in ihrer Ruheposition vorliegenden Ausgabeeinheit vorbei führbar ist. Nach der Ausgabe des Getränks über die mindestens eine Ausgabeeinheit lässt sich somit dann beispielsweise die Ausgabeeinheit aus einer Ausgabeposition in die Ruheposition verstellen, sodass der Druckkopf im Anschluss zum Bedrucken des Getränks Raum innerhalb des Druckmodulgehäuses nutzen kann, der zuvor zumindest teilweise von der Ausgabeeinheit für die Ausgabe des Getränks genutzt wurde. Die mindestens eine Ausgabeeinheit kann somit zumindest teilweise in ihrer Ausgabeposition in einen Verstellweg ragen, entlang dem der Druckkopf (für einen nachfolgenden Druckvorgang) verstellbar ist.

In einer Ausführungsvariante, bei der die mindestens eine Ausgabeeinheit in dem Druckmodulgehäuse zwischen einer Ruheposition und einer Ausgabeposition verstellbar ist, kann ergänzend vorgesehen sein, dass die Ausgabeeinheit innerhalb des Druckmodulgehäuses um eine Schwenkachse zwischen ihrer Ruheposition und ihrer Ausgabeposition schwenkbar ist. Derart kann beispielsweise vorgesehen sein, dass die Ausgabeeinheit zur Seite oder nach unten weggeschwenkt wird, um ein Bedrucken des Getränks über den Druckkopf zu ermöglichen. In diesem Zusammenhang kann insbesondere ferner vorgesehen sein, dass die Druckeinrichtung mit dem Druckkopf in eine Druckposition an oder in dem Druckmodulgehäuse schwenkt, wenn die Ausgabeeinheit in ihre Ruheposition geschwenkt wird. Hierfür kann beispielsweise eine drehfeste Kopplung der beiden dann jeweils in dem Druckmodulgehäuse schwenkbar gelagerten Einrichtungen zum Ausgeben eines Getränks und zum Bedrucken eines Getränks vorgesehen sein.

Grundsätzlich kann der Druckkopf zum Bedrucken des Getränks in dem Druckmodulgehäuse in eine Druckposition verstellbar sein, in der der Druckkopf wiederum zumindest teilweise in einen Verstellweg ragt, entlang dem die mindestens eine Ausgabeeinheit in ihre Ausgangsposition verstellbar ist. Hierunter wird insbesondere verstanden, dass der Druckkopf in seiner Druckposition teilweise Raum an oder in dem Druckmodulgehäuse beansprucht, der von der in ihre Ausgangsposition verstellten Ausgabeeinheit genutzt wird, wenn hierüber ein Getränk auszugeben ist. Der über das Druckmodulgehäuse zur Verfügung gestellte Raum wird somit an der Vorrichtung durch die Verstellbarkeit der unterschiedlichen Komponenten effektiv genutzt. Darüber hinaus kann über die Verstellbarkeit der genannten Komponenten der Druckeinrichtung und der Ausgabeeinrichtung auch leicht sichergestellt werden, dass die einzelnen Prozesse (Ausgeben des Getränks und Bedrucken des Getränks) zeitlich versetzt zueinander erfolgen und beispielsweise nicht ein für das Bedrucken vorgesehenes Druckmedium während der Ausgabe des Getränks am Druckkopf ausgegeben wird.

Sind der mindestens eine Druckkopf der Druckeinrichtung und wenigstens ein Teil der Ausgabeeinrichtung in einem gemeinsamen Druckmodulgehäuse angeordnet, lässt sich hierüber beispielsweise in einer Ausführungsvariante erreichen, dass von dem Druckkopf für einen Menschen genießbares Druckmedium und von der mindestens einen Ausgabeeinheit das Getränk an derselben Seite des Druckmodulgehäuses ausgebbar sind. Das Ausgeben an derselben Seite des Druckmodulgehäuses, beispielsweise an einer einer Plattform für das Abstellen eines Gefäßes zugewandten Unterseite des Druckmodulgehäuses, kann hierbei wie vorstehend erläutert zeitlich aufeinanderfolgend vorgesehen sein, um einen Druckvorgang erst automatisiert zu starten, wenn auch die Ausgabe des Getränks bereits vollständig oder zumindest nahezu vollständig abgeschlossen ist.

In einer zweiten erfindungsgemäßen Ausführungsform umfasst die Druckeinrichtung mindestens einen Druckkopf, der in einem Druckmodulgehäuse untergebracht ist, wobei dieses Druckmodulgehäuse an einem Vorrichtungsgehäuse der Vorrichtung zwischen einer Ruhestellung und einer Gebrauchsstellung verstellbar ist. Bei dieser Ausführungsform wird folglich für das Bedrucken eines Getränks das den Druckkopf aufnehmende Druckmodulgehäuse aus einer Ruhestellung in eine Gebrauchsstellung verstellt. In der Ruhestellung ist derart dann beispielsweise der Druckkopf nicht zum Bedrucken nutzbar. Die gezielt erforderliche Verstellung des Druckmodulgehäuses kann hierbei beispielsweise Fehlbedienungen ausschließen. Alternativ oder ergänzend kann über ein verstellbar an der Vorrichtung vorgesehenes Druckmodulgehäuse die Vorrichtung zwischen zwei verschiedenen Betriebsmodi wechseln. Während in der Ruhestellung des Druckmodulgehäuses beispielsweise ein erster Betriebsmodus vorgesehen ist, in dem Getränke zubereitet und ausgegeben werden, geht mit einer Verstellung des Druckmodulgehäuses in seine Gebrauchsstellung ein Wechsel in einen zweiten Betriebsmodus der Vorrichtung einher, in dem die Vorrichtung dann (gegebenenfalls nur noch) zum Bedrucken von Getränken nutzbar ist.

Hierbei umfasst die Vorrichtung zusätzlich ein Ausgabegehäuse, das wenigstens einen Teil der Ausgabeeinrichtung aufnimmt und an der Vorrichtung zwischen einer Ausgabestellung und einer Parkstellung verstellbar ist. Hierbei ist dann das Ausgabegehäuse
- in seine Ausgabestellung verstellt, wenn das Druckmodulgehäuse in seine Ruhestellung verstellt ist, und
- in seine Parkstellung verstellt, wenn das Druckmodulgehäuse in seine Gebrauchsstellung verstellt ist.

Basierend auf einer derartigen Ausführungsvariante kann demnach beispielsweise eine Vorrichtung bereitgestellt werden, bei der die jeweiligen Gehäuse wechselseitig ihre Stellung wechseln müssen, um die eine oder andere Funktion (Ausgeben eines Getränks und Bedrucken eines Getränks) respektive den jeweiligen Betriebsmodus zur Verfügung zu stellen.

Beispielsweise ist das Ausgabegehäuse in seiner Parkstellung zumindest teilweise in einer Aufnahme eines Vorrichtungsgehäuses der Vorrichtung aufgenommen. Hierunter wird insbesondere verstanden, dass das die Ausgabe eines Getränks ermöglichende Ausgabegehäuse an der Vorrichtung in das Vorrichtungsgehäuse eingeklappt, eingeschoben oder eingefahren ist, wenn das für das Bedrucken des Getränks vorgesehene Druckmodulgehäuse umgekehrt an der Vorrichtung ausgeklappt, ausgefahren oder ausgezogen ist und hierüber einer Plattform gegenüberliegt, auf der wenigstens ein Gefäß mit dem zu bedruckenden Getränk platziert ist. Beispielsweise steht das Druckmodulgehäuse in seiner Gebrauchsstellung an einer Frontseite der Vorrichtung respektive einer Frontseite des Vorrichtungsgehäuses vor. Ist das Druckmodulgehäuse wiederum in seine Ruhestellung verstellt, kann umgekehrt das Ausgabegehäuse in seine Parkstellung verstellt sein, in der dann das Ausgabegehäuse an der Frontseite der Vorrichtung vorsteht.

Beispielsweise können das Druckmodulgehäuse und das Ausgabegehäuse drehfest miteinander gekoppelt sein. Derart führt eine Verstellung des Druckmodulgehäuses durch Drehung von seiner Ruhestellung in seine Gebrauchsstellung zwangsläufig zu einer Verstellung des Ausgabegehäuses aus der Ausgabestellung in die Parkstellung. Eine Schwenkbewegung des einen Gehäuses in eine jeweilige Stellung geht somit durch die drehfeste Kopplung zwingend mit einer korrespondierenden Schwenkbewegung in dieselbe Schwenkrichtung des anderen Gehäuses einher.

Alternativ kann eine translatorische Verstellbarkeit der beiden Gehäuse (Druckmodulgehäuse und Ausgabegehäuse) vorgesehen sein. Dies schließt insbesondere eine Ausführungsvariante ein, bei der ein wechselseitiges Ein- und Ausfahren der beiden Gehäuse durch mechanische Kopplung vorgesehen ist. Beispielsweise können hierbei die beiden Gehäuse an einem Vorrichtungsgehäuse der Vorrichtung wechselseitig ein- und ausgeschoben werden, insbesondere entlang zueinander paralleler Verstellachsen.

In einer alternativen Ausführungsvariante mit einem Druckmodulgehäuse, das drehfest mit einem Ausgabegehäuse gekoppelt und um eine Schwenkachse schwenkbar an der Vorrichtung gelagert ist, ist beispielsweise das Druckmodulgehäuse um eine, bei bestimmungsgemäßer Aufstellung der Vorrichtung, vertikal oder horizontal verlaufende Schwenkachse an der Vorrichtung schwenkbar und mithin ein- und ausklappbar.

Grundsätzlich kann die Position eines mindestens einen Druckkopf der Druckeinrichtung lagernden Druckmodulgehäuses an der Vorrichtung bezüglich eines ein Getränk beinhaltenden Gefäßes einstellbar sein. Hierunter wird nicht nur eine manuelle Einstellbarkeit des Druckmodulgehäuses, beispielsweise in seiner Höhe bezüglich einer Plattform, auf der das Gefäß zu platzieren ist, verstanden. Vielmehr ist hierunter auch eine Ausführungsvariante zu verstehen, bei der die Position des Druckmodulgehäuses fremdkraftbetätigt und damit insbesondere motorisch, und/oder sensorisch unterstützt (und damit gegebenenfalls automatisiert) einstellbar ist. So kann die Vorrichtung dann beispielsweise eine Sensorik und wenigstens einen Antriebsmotor umfassen, um das Druckmodulgehäuse mit seinem Druckkopf gezielt bezüglich eines das zu bedruckende Getränk beinhaltenden Gefäßes auszurichten, sodass über den Druckkopf das gewünschte Motiv auf das Getränk aufgedruckt werden kann. Die Position des Druckmodulgehäuses ist folglich fremdkraftbetätigt und sensorisch unterstützt derart einstellbar, dass ein eine Öffnung des Gefäßes berandender Gefäßrand oder eine Getränkeoberfläche eines in dem Gefäß aufgenommenen und zu bedruckenden Getränks innerhalb eines vorgegebenen Abstandsintervalls zu dem Druckkopf liegt.

Alternativ oder ergänzend kann die Position eines Trägers der Vorrichtung für ein ein auszugebendes Getränk aufnehmendes Gefäß an der Vorrichtung einstellbar sein, insbesondere fremdkraftbetätigt und/oder sensorisch unterstützt. Hierbei ist beispielsweise ein eine Plattform für das Gefäß umfassender Träger bezüglich des Druckkopfes der Druckeinrichtung in seiner Höhe einstellbar, um das das Getränk aufnehmende Gefäß zu verlagern.

Beispielsweise ist die Vorrichtung als Kaffeemaschine ausgebildet, insbesondere als Kaffeevollautomat.

Die vorgeschlagene Lösung umfasst ferner ein Druckmodul für das Aufdrucken eines Motivs aus für Menschen genießbaren Druckmedium auf ein Getränk, wobei das Druckmodul als vormontierte und auf seine bestimmungsgemäße Funktion vorprüfbare Baueinheit an eine Vorrichtung zur Zubereitung und Ausgabe eines Getränks montierbar ist. Ein vorgeschlagenes Druckmodul ist somit für die nachträgliche Montage an eine Vorrichtung zur Zubereitung und Ausgabe eines Getränks eingerichtet und vorgesehen, sodass über das bestimmungsgemäß montierte Druckmodul eine zusätzliche Druckfunktion an der Vorrichtung integriert wird. Ein entsprechendes Druckmodul kann beispielsweise für einen Kaffeevollautomaten eingerichtet und vorgesehen sein.

Ein Druckmodul umfasst beispielsweise ein Druckmodulgehäuse, in dem mindestens ein Druckkopf für das Drucken mit dem Druckmedium verstellbar gelagert ist. Insbesondere kann ein Druckmodul in dem Druckmodulgehäuse mindestens eine Aufnahme für eine Druckmodulkassette umfassen, die mit dem zu verwendenden Druckmedium gefüllt ist. Eine entsprechende Druckmodulkassette kann beispielsweise nach Art eines Tintenstrahldruckers (für einen Menschen genießbare und damit z.B. aus Lebensmittelfarbe und/oder Lebensmittel hergestellte) Druckflüssigkeit beinhalten und an einen entsprechenden Steckplatz des Druckmodulgehäuses des Druckmoduls einsetzbar sein. Für die Verstellbarkeit des Druckkopfes innerhalb des Druckmodulgehäuses kann beispielsweise eine Druckschienenanordnung innerhalb des Druckmodulgehäuses vorgesehen sein.

Ein weiterer Aspekt betrifft ein Verfahren zum Bedrucken eines Getränks, das mit einer Vorrichtung zubereitet und ausgegeben wird, wobei das Bedrucken mit einem für Menschen genießbaren Druckmedium über dieselbe Vorrichtung erfolgt, über die das Getränk auch ausgegeben wurde.

In Einklang mit den vorstehenden Erläuterungen geht somit auch das Verfahren von dem Grundgedanken aus, in einer Vorrichtung mehrere Verfahrensschritte zu integrieren, um ein mit einem gewünschten Motiv bedrucktes Getränk effizient und in kurzer Zeit zur Verfügung stellen zu können.

Das Verfahren ist hierbei insbesondere auch durch Ausführungsvarianten einer vorgeschlagenen Vorrichtung umsetzbar. Dementsprechend gelten vorstehend und nachstehend erläuterte Vorteile und Merkmale von Ausführungsvarianten einer vorgeschlagenen Vorrichtung auch für Ausführungsvarianten des Verfahrens und umgekehrt.

Die beigefügten Figuren veranschaulichen exemplarisch mögliche Ausführungsvarianten der vorgeschlagenen Lösung.

Hierbei zeigen:
- Figur 1: mit Blick auf eine Frontseite eine Kaffeemaschine als Ausführungsvariante einer vorgeschlagenen Vorrichtung mit integriertem Druckmodul;
- Figuren 2A-2B: die Kaffeemaschine der Figur 1 in teilweise geschnittener Seitenansicht mit dem Druckkopf des Druckmoduls und in das Druckmodul integrierten Kaffee- und Milchausläufen in unterschiedlichen Positionen;
- Figur 3: das Druckmodul in Einzelansicht mit Blick auf eine Unterseite;
- Figur 4: eine weitere Ausführungsvariante einer vorgeschlagenen Kaffeemaschine in teilweise geschnittener Seitenansicht, mit einem Druckmodulgehäuse, das drehfest mit einem Ausgabegehäuse gekoppelt und um eine vertikal verlaufende Schwenkachse an der Kaffeemaschine schwenkbar ist;
- Figur 5: eine weitere Ausführungsvariante einer vorgeschlagenen Kaffeemaschine in teilweise geschnittener Seitenansicht, mit einem Druckmodulgehäuse, das drehfest mit einem Ausgabegehäuse gekoppelt und um eine horizontal verlaufende Schwenkachse an der Kaffeemaschine schwenkbar ist;
- Figur 6: ein Ablaufdiagramm für eine Ausführungsvariante eines vorgeschlagenen Verfahrens;
- Figur 7A-7B: in verschiedenen Ansichten eine aus dem Stand der Technik bekannte Kaffeemaschine.

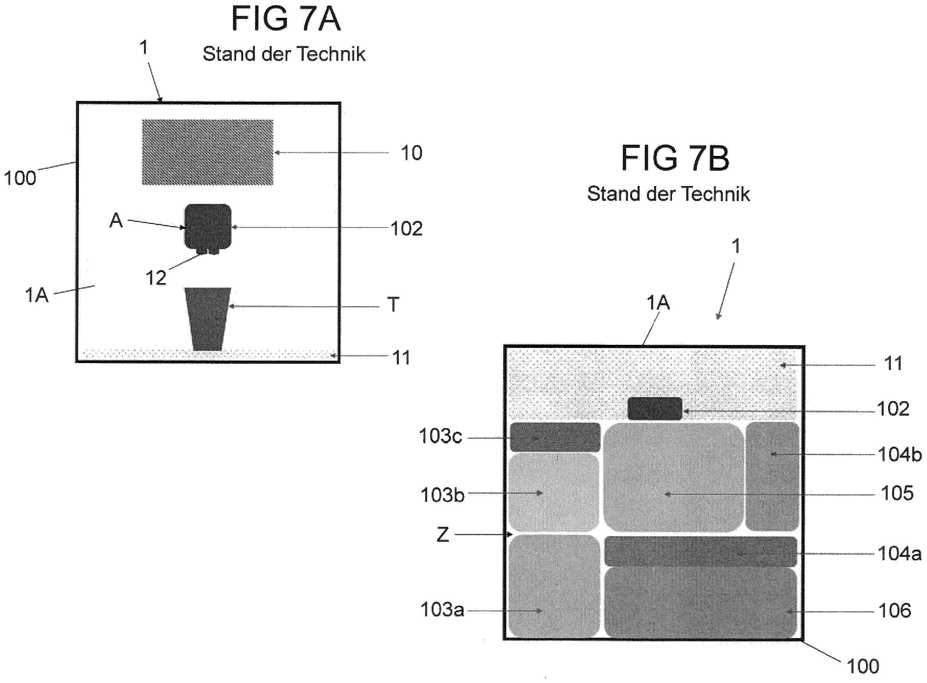

Die Figuren 7A und 7B zeigen in Vorderansicht mit Blick auf eine Frontseite 1A und in einer geschnittenen Draufsicht eine aus dem Stand der Technik bekannte Kaffeemaschine 1 in Form eines Kaffeevollautomaten. An der Frontseite 1A der Kaffeemaschine 1 befindet sich ein Bedienfeld, zum Beispiel in Form eines Touchpanels, zur Steuerung der Kaffeemaschine 1 sowie ein Ausgabegehäuse 102 einer Ausgabeeinrichtung A mit einem Kaffeeauslauf 12 als Ausgabeeinheit und gegebenenfalls noch einem Milchauslauf. Das Ausgabegehäuse 102 steht an der Frontseite 1A der Kaffeemaschine 1 vor und befindet sich mit dem Kaffeeauslauf 12 oberhalb einer Auffangschale 11 und damit einer Plattform, auf der ein Gefäß T, zum Beispiel eine Tasse oder ein Trinkglas, platziert werden können.

Innerhalb eines Vorrichtungsgehäuses 100 der Kaffeemaschine 1 sind unterschiedliche Komponenten einer Zubereitungseinrichtung Z der Kaffeemaschine 1 untergebracht. Hierzu zählen insbesondere ein Bohnenbehälter 103a für Kaffeebohnen, ein Mahlwerk 103b und ein Kaffeesatzbehälter 103c sowie ein Milchtank 104a und ein Milchschäumer 104b. Zusätzlich sind als Teil der Zubereitungseinrichtung Z eine Brühgruppe 105 für das Erhitzen des Kaffeewassers und ein Wassertank 106 vorgesehen.

Basierend auf einer derart aus dem Stand der Technik bekannten Kaffeemaschine 1 sieht die vorgeschlagene Lösung in den dargestellten Ausführungsbeispielen exemplarisch die Integration einer Druckeinrichtung D für das Bedrucken eines mit der Kaffeemaschine 1 zubereiteten und ausgegebenen Getränks vor. So kann dann beispielsweise über die in die Kaffeemaschine 1 integrierte Druckeinrichtung D ein über den Milchschäumer 104b an der Ausgabeeinrichtung A ausgegebener Milchschaum mit einem gewünschten Motiv bedruckt werden. Das entsprechende Motiv ist hierbei beispielsweise in einem elektronischen Speicher hinterlegt, der mit einem Druckkopf 23 der Druckeinrichtung D gekoppelt ist.

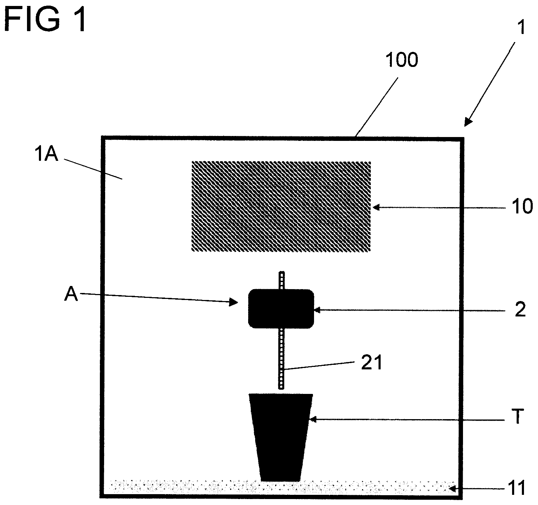

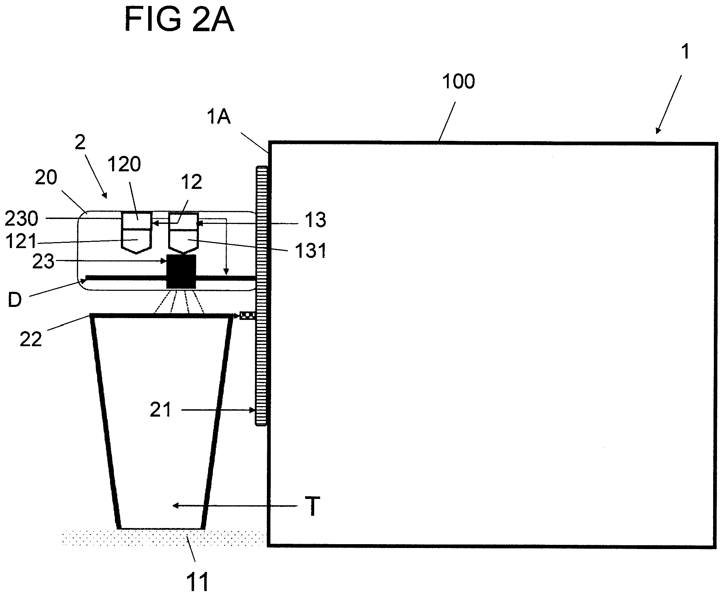

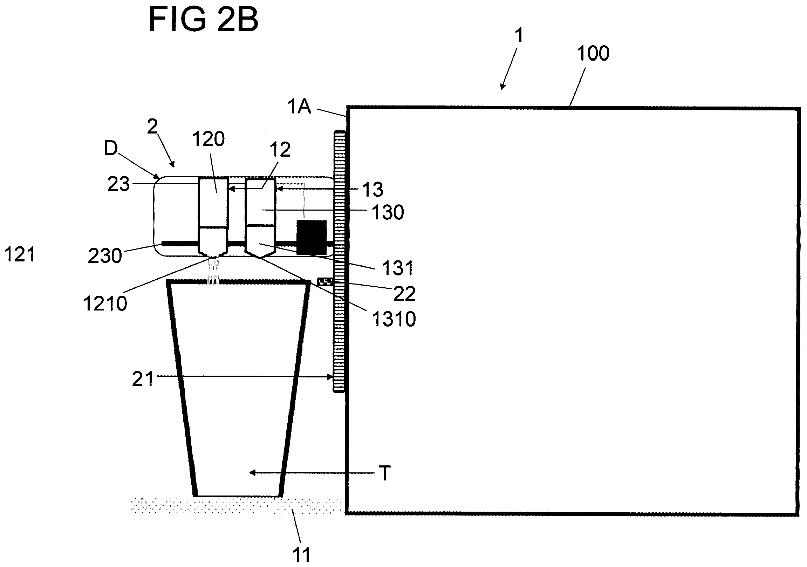

Bei der Ausführungsvariante der Figuren 1, 2A und 2B weist die Druckeinrichtung D ein Druckmodul 2 mit einem Druckmodulgehäuse 20 auf, in dem auch zusätzlich Teile der Ausgabeeinrichtung A, hier in Form der Kaffee- und Milchausläufe 12 und 13 untergebracht sind. Das Druckmodulgehäuse 20 des Druckmoduls 2 ist an der Frontseite 1A der Kaffeemaschine 1 vorstehend oberhalb der Auffangschale 11 vorgesehen. Für die Anpassung an unterschiedliche Getränke und Gefäßtypen ist das Druckmodulgehäuse 20 hierbei über eine an der Frontseite 1A vorgesehene Verstellschiene 21 translatorisch in seiner Höhe einstellbar, beispielsweise über einen elektromotorischen Antrieb.

Wie insbesondere aus den Schnittdarstellungen der Figuren 2A und 2B ersichtlich ist, ist der Druckkopf 23 des Druckmoduls 2 innerhalb des Druckmodulgehäuses 20 verstellbar gelagert. Exemplarisch sieht das Druckmodul 2 der Figuren 1, 2A und 2B hierfür eine Druckschienenanordnung 230 vor, über die der Druckkopf 23 entlang zweier zueinander senkrecht stehender Raumachsen innerhalb des Druckmodulgehäuses 20 verfahrbar ist. Insbesondere der Druckkopf 23 zwischen einer in der Figur 2A dargestellten Druckposition und einer in der Figur 2B dargestellten Ruheposition verstellbar. In seiner Druckposition ist der Druckkopf 23 oberhalb des Gefäßes T zum Aufdrucken eines gewünschten Motivs mit einem flüssigen Lebensmittel und/oder Lebensmittelfarbe an einer Unterseite 20A des Gehäuses 20 entlang verfahrbar. In seiner Ruheposition ist der Druckkopf 23 innerhalb des Druckmodulgehäuses 20 in eine Position verstellt, in der durch den Druckkopf 23 die Ausgabe von Kaffee und Milch über die Kaffee- und Milchausläufe 12 und 13 nicht beeinträchtigt wird. Derart kann Kaffee oder Milch an derselben Unterseite 20A des Modulgehäuses 20 ausgegeben werden, an der auch das Ausgeben des Druckmediums über den Druckkopf 23 erfolgt.

In der in der Figur 2B dargestellten Ruheposition des Druckkopfes 23 ragt der Druckkopf 23 dann nicht mehr in einen Verstellweg, entlang dem die Kaffee- und Milchausläufe 12 und 13 zur Ausgabe in Richtung auf das Gefäß T verstellbar sind. So weisen die Kaffee und Milchausläufe 12 und 13 jeweils eine in dem Druckmodulgehäuse 20 unbeweglich fixierte Basis 120 oder 130 auf, an der jeweils ein Ausgabekopf 121 oder 131 linear verstellbar gelagert ist. Ist der jeweilige Ausgabekopf 121 oder 131 mit einer hieran jeweils ausgebildeten Ausgabeöffnung 1210 oder 1310 entsprechend der Figur 2A eingefahren, befindet sich der jeweilige Kaffeeauslauf 12 oder Milchauslauf 13 in einer Ruheposition. In der jeweiligen Ruheposition kann der in seiner Druckposition befindliche Druckkopf 23 entsprechend der Figur 2A wiederum an den dann eingefahrenen Ausgabeköpfen 121 und 131 und damit den Kaffee- und Milchausläufen 12 und 13 vorbeigeführt werden, ohne mit den Ausgabeköpfen 121 und 131 zu kollidieren. Umgekehrt können die Ausgabeköpfe 121 und 131 der Kaffee- und Milchausläufe 12 und 13 problemlos in eine Ausgabeposition ausgefahren werden, wenn sich der Druckkopf 23 in seiner Ruheposition findet.

Um das Druckmodulgehäuse 20 in einem vorgesehenen Abstand zu dem Gefäß T und insbesondere zu dessen oberem Gefäßrand zu positionieren, sodass beispielsweise das Bedrucken eines in dem Gefäß T befindlichen Milchschaums über den Druckkopf 23 problemlos möglich ist, ist an der Frontseite 1A ein Sensor, hier in Form einer Lichtschranke 22, vorgesehen. Mit der Lichtschranke 22 lässt sich beispielsweise die Höhe des Gefäßes T und hieraus dann die erforderliche Verstellposition des Druckmodulgehäuses 20 ermitteln.

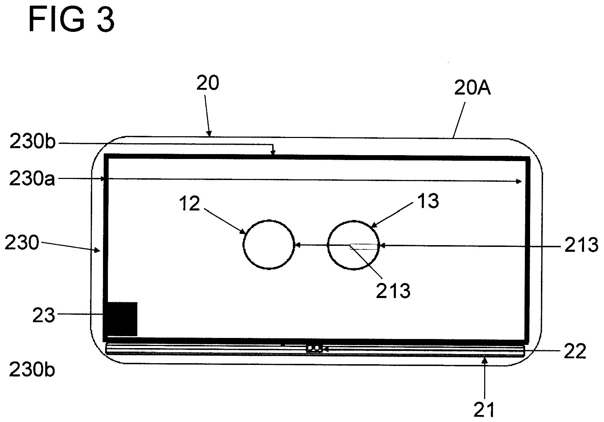

Bei dem Druckmodulgehäuse 20 des Druckmoduls 2 der Figuren 1, 2A und 2B können entsprechend der Darstellung der Figur 3 Druckschienen 230a und 230b als Teile der Druckschienenanordnung 230 für den Druckkopf 23 umlaufend vorgesehen sein. Die Druckschienenanordnung 230 kann hierbei beispielsweise Auslässe 212 und 213 an der Unterseite 20A des Druckmodulgehäuses für den auszugebenden Kaffee und die auszugebende Milch umranden. Ergänzend kann mindestens eine zusätzliche, mittlere und die Auslässe 212 und 213 kreuzende Druckschiene als Teil der Druckschienenanordnung 230 vorgesehen sein.

In einer alternativen Ausführungsvariante können die Ausgabeeinheiten in Form der Kaffee- und Milchausläufe 12 und 13 in dem Druckmodulgehäuse 20 zwischen einer Ruheposition und einer Ausgabeposition zwischen ihrer Ruheposition und ihrer Ausgabeposition um eine Schwenkachse schwenkbar sein. Derart kann beispielsweise vorgesehen sein, dass die Kaffee- und Milchausläufe 12 und 13 zur Seite oder nach unten weggeschwenkt werden, um ein Bedrucken des Getränks über den Druckkopf 23 zu ermöglichen. In diesem Zusammenhang kann insbesondere ferner vorgesehen sein, dass der Druckkopf 23 in eine Druckposition in dem Druckmodulgehäuse schwenkt, wenn die Kaffee- und Milchausläufe 12 und 13 in ihre Ruheposition geschwenkt werden. Hierfür kann beispielsweise eine drehfeste Kopplung zwischen den dann schwenkbar in dem Druckmodulgehäuse 20 gelagerten Kaffee- und Milchausläufen 12 und 13 und einer dann ebenfalls schwenkbar in dem Druckmodulgehäuse 20 gelagerten Lagereinrichtung des Druckkopfes 23 vorgesehen sein, zum Beispiel um eine horizontal oder vertikal verlaufende Schwenkachse (bezogen auf eine bestimmungsgemäße Aufstellung der Kaffeemaschine 1 auf einem ebenen Untergrund).

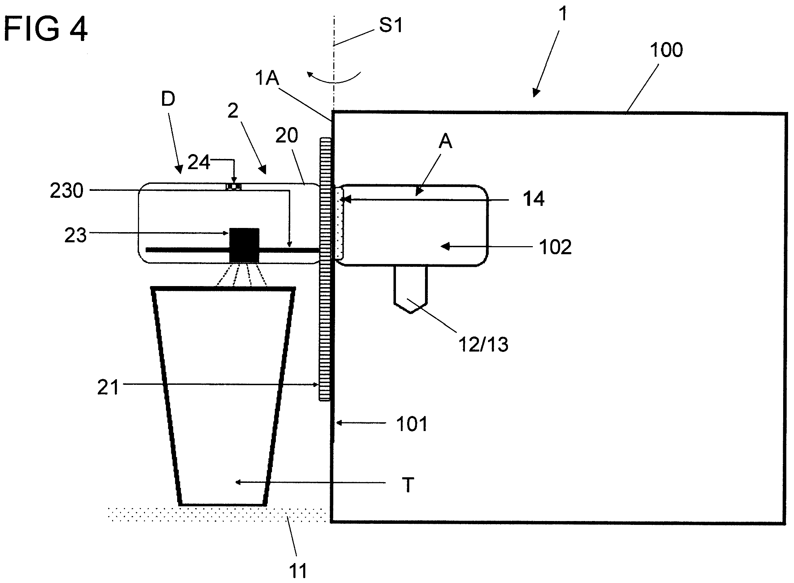

Bei der alternativen Ausführungsvariante der Figur 4 sind die Ausgabeeinrichtung A und die Druckeinrichtung D der Kaffeemaschine 1 gehäuseseitig voneinander getrennt, sodass jeweils nur entweder das Druckmodulgehäuse 20 oder das Ausgabegehäuse 102 an der Frontseite 1A der Kaffeemaschine 1 oberhalb der Auffangschale 11 vorsteht. Hierbei sind das Druckmodulgehäuse 20 und das Ausgabegehäuse 102 jedoch drehfest miteinander gekoppelt und gemeinsam um eine vertikal verlaufende Schwenkachse S1 schwenkbar an dem Vorrichtungsgehäuse 100 gelagert. Für die Schwenkbarkeit der beiden Gehäuse 20 und 102 ist wenigstens ein Schwenklager 14, z.B. ein Scharnier, vorgesehen. Hierüber sind bei Bedarf gleichzeitig das Druckmodul 2 mit einem Druckmodulgehäuse 20 aus dem Inneren des Vorrichtungsgehäuses 100 ausklappbar und die Ausgabeeinrichtung A mit ihrem Ausgabegehäuse 102 in das Vorrichtungsgehäuse 100 einklappbar sowie umgekehrt die Ausgabeeinrichtung A mit dem Ausgabegehäuse 10A aus dem Vorrichtungsgehäuse 100 herausklappbar und das Druckmodul 2 in das Vorrichtungsgehäuse 100 einklappbar. Durch die schwenkbare Lagerung über die vertikal verlaufende Schwenkachse S1 ist somit das Druckmodulgehäuse 20 aus seiner Ruhestellung in eine in der Figur 4 dargestellte Gebrauchsstellung geschwenkt, wenn das Ausgabegehäuse 102 aus seiner Ausgabestellung in die in der Figur 4 dargestellte Parkstellung geschwenkt ist.

Eine Schwenkbewegung zum Wechseln zwischen den Gehäusen 20, 102 an der Frontseite 1A (hier um 180°) um die Schwenkachse S1 kann manuell von einem Nutzer vorgenommen werden. Alternativ oder ergänzend ist eine fremdkraftbetätigte Schwenkbewegung auslösbar, um beispielsweise automatisch nach einem Ausgeben eines Getränks, beispielsweise mit Milchschaum, das Druckmodul 2 auszuklappen und einen zuvor eingestellten Druckvorgang auszulösen. Um hierbei den Druckkopf 23 in einem bestimmten Abstand zu einer Oberseite des Gefäßes T zu positionieren, ist bei der Ausführungsvariante der Figur 4 exemplarisch anstelle der Lichtschranke 22 ein Höhensensor 24 vorgesehen. Über diesen Höhensensor 24 lässt sich beispielsweise auf die Höhe des Druckmodulgehäuses 20 bezüglich des Gefäßes T schließen.

Mit den Gehäusen 20 und 102 ist ferner ein Wandungselement 101 gekoppelt, das je nach Stellung der Gehäuse 20, 102 mit einer ersten oder eine zweiten Seite an der Frontseite 1A der Kaffeemaschine 1 vorliegt und dort eine Sichtfläche bildet.

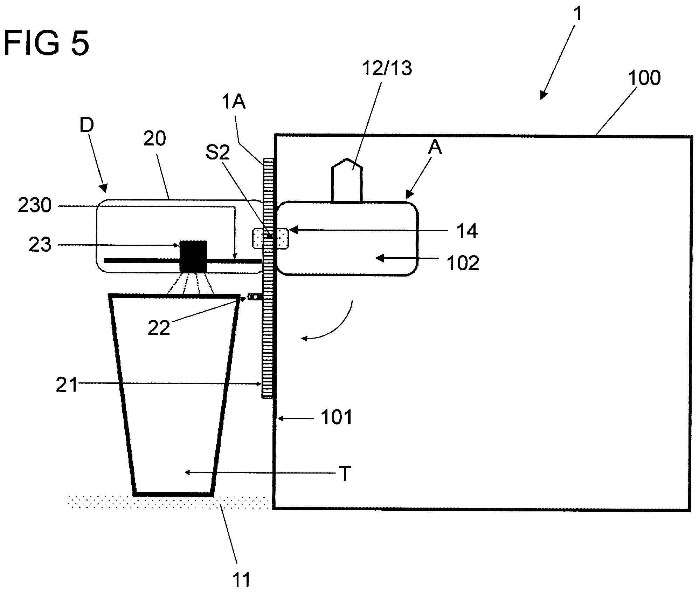

Bei der Ausführungsvariante der Figur 5 sind das Druckmodulgehäuse 20 und das Ausgabegehäuse 102 ebenfalls drehfest miteinander gekoppelt. Hierbei sind jedoch die beiden Gehäuse 20 und 102 um eine horizontal verlaufende Schwenkachse S2 an dem Vorrichtungsgehäuse 100 der Kaffeemaschine 1 schwenkbar gelagert. Je nach Schwenkstellung befindet sich dann auch hier jeweils das eine oder das andere Gehäuse 20,102 im Inneren des Vorrichtungsgehäuses 100, während das jeweilige andere Gehäuse 102, 20 an der Frontseite 1A zur Bereitstellung der jeweils gewünschten Funktion vorsteht.

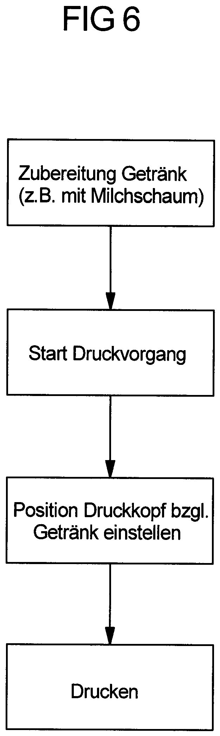

Mit der Figur 6 ist exemplarisch und schematisch eine mögliche Ausführungsvariante eines mit den Kaffeemaschinen 1 der Figuren 1 bis 5 ausführbaren Verfahrens zur Zubereitung eines Getränks und zum anschließenden Bedrucken dieses Getränks veranschaulicht. Hierbei wird zunächst in einem ersten Schritt das Getränk auf Benutzerwunsch zubereitet, zum Beispiel mit Milchschaum. Anschließend erfolgt, gegebenenfalls automatisiert über die Vorgabe des ausgegebenen Getränks und des hiermit zu bedruckenden Motivs, der Start eines Druckvorgangs. Vor der Ausgabe des Druckmediums über den Druckkopf 23 wird die Position des Druckkopfes 23 bezüglich des Getränks eingestellt, insbesondere nachjustiert.

Bei einer verstellbaren und die Auffangschale 11 integrierenden Plattform für das Gefäß T wäre alternativ oder ergänzend eine Verstellung dieser Plattform möglich, um sicherzustellen, dass der Druckkopf 23 zu dem zu bedruckenden Getränk in einem gewünschten Abstand vorliegt.

### Bezugszeichenliste

- 1: Kaffeemaschine
- 10: Bedienfeld
- 100: Vorrichtungsgehäuse
- 101: Wandungselement
- 102: Ausgabegehäuse
- 103a: Bohnenbehälter
- 103b: Mahlwerk
- 103c: Kaffeesatzbehälter
- 104a: Milchtank
- 104b: Milchschäumer
- 105: Brühgruppe
- 106: Wassertank
- 11: Auffangschale / Plattform (Träger)
- 12: Kaffeeauslauf (Ausgabeeinheit)
- 120: Basis
- 121: Ausgabekopf
- 1210: Ausgabeöffnung
- 13: Milchauslauf (Ausgabeeinheit)
- 130: Basis
- 131: Ausgabekopf
- 1310: Ausgabeöffnung
- 14: Schwenklager
- 1A: Frontseite
- 2: Druckmodul
- 20: Druckmodulgehäuse
- 20A: Unterseite
- 21: Verstellschiene
- 212,213: Auslass
- 22: Lichtschranke (Sensor)
- 23: Druckkopf
- 230: Druckschienenanordnung
- 230a, 230b: Druckschiene
- 24: Höhensensor
- A: Ausgabeeinrichtung
- D: Druckeinrichtung
- S1, S2: Schwenkachse
- T: Gefäß
- Z: Zubereitungseinrichtung

## Patentansprüche

1. Vorrichtung zur Ausgabe eines Getränks, mit wenigstens
- einer Zubereitungseinrichtung (Z) für die Zubereitung eines Getränks,
- einer Ausgabeeinrichtung (A) mit wenigstens einer Ausgabeöffnung (1210, 1310) für die Ausgabe des Getränks, und
- mindestens eine Druckeinrichtung (D), mit der ein über die Ausgabeeinrichtung (A) ausgegebenes Getränk bedruckbar ist,
**dadurch gekennzeichnet, dass**
die Druckeinrichtung (D) einen Druckkopf (23) umfasst, der in einem wenigstens auch einen Teil der Ausgabeeinrichtung (A) aufnehmenden Druckmodulgehäuse (20) angeordnet ist, wobei in dem Druckmodulgehäuse (20) mindestens eine die wenigstens eine Ausgabeöffnung (1210, 1310) bereitstellende Ausgabeeinheit (12, 13) der Ausgabeeinrichtung (A) angeordnet ist und die mindestens eine Ausgabeeinheit (12, 13) in dem Druckmodulgehäuse (20) zwischen einer Ruheposition und einer Ausgabeposition verstellbar ist,
oder
die Druckeinrichtung (D) einen Druckkopf (23) umfasst, der in einem Druckmodulgehäuse (20) untergebracht ist, das Druckmodulgehäuse (20) an einem Vorrichtungsgehäuse (100) der Vorrichtung zwischen einer Ruhestellung und einer Gebrauchsstellung verstellbar ist und die Vorrichtung (1) ein Ausgabegehäuse (102) umfasst, das wenigstens einen Teil der Ausgabeeinrichtung (A) aufnimmt und an der Vorrichtung (1) zwischen einer Ausgabestellung und einer Parkstellung verstellbar ist, wobei das Ausgabegehäuse (102)
- in seine Ausgabestellung verstellt ist, wenn das Druckmodulgehäuse (20) in seine Ruhestellung verstellt ist, und
- in seine Parkstellung verstellt ist, wenn das Druckmodulgehäuse (20) in seine Gebrauchsstellung verstellt ist.

2. Vorrichtung nach Anspruch 1, **dadurch gekennzeichnet, dass** die Druckeinrichtung (D) mindestens einen translatorisch und/oder rotatorisch verstellbaren Druckkopf (23) für das Bedrucken eines Getränks umfasst.

3. Vorrichtung nach Anspruch 1 oder 2, **dadurch gekennzeichnet, dass**, wenn die mindestens eine Ausgabeeinheit (12, 13) in dem Druckmodulgehäuse (20) zwischen einer Ruheposition und einer Ausgabeposition verstellbar ist, der Druckkopf (23) zum Bedrucken des Getränks an der mindestens einen in ihrer Ruheposition vorliegenden Ausgabeeinheit (12, 13) vorbei führbar ist.

4. Vorrichtung nach Anspruch 3, **dadurch gekennzeichnet, dass** die mindestens eine Ausgabeeinheit (12, 13) in ihrer Ausgabeposition zumindest teilweise in einen Verstellweg ragt, entlang dem der Druckkopf (23) verstellbar ist.

5. Vorrichtung nach einem der vorhergehenden Ansprüche, **dadurch gekennzeichnet, dass**, wenn die mindestens eine Ausgabeeinheit (12, 13) in dem Druckmodulgehäuse (20) zwischen einer Ruheposition und einer Ausgabeposition verstellbar ist, der Druckkopf (23) zum Bedrucken des Getränks in eine Druckposition verstellbar ist, in der der Druckkopf (23) zumindest teilweise in einen Verstellweg ragt, entlang dem die mindestens eine Ausgabeeinheit (12, 13) in ihre Ausgabeposition verstellbar ist.

6. Vorrichtung nach Anspruch 1 oder 2, **dadurch gekennzeichnet, dass** das Ausgabegehäuse (102) in seiner Parkstellung zumindest teilweise in einer Aufnahme eines Vorrichtungsgehäuses (100) der Vorrichtung (1) aufgenommen ist.

7. Vorrichtung nach Anspruch 6, **dadurch gekennzeichnet, dass**, wenn das Druckmodulgehäuse (20) an einem Vorrichtungsgehäuse (100) der Vorrichtung zwischen einer Ruhestellung und einer Gebrauchsstellung verstellbar ist, das Druckmodulgehäuse (20) drehfest mit einem Ausgabegehäuse (102) gekoppelt ist, das wenigstens einen Teil der Ausgabeeinrichtung (A) aufnimmt.

8. Vorrichtung nach Anspruch 7, **dadurch gekennzeichnet, dass** das Druckmodulgehäuse (20) um eine, bei bestimmungsgemäßer Aufstellung der Vorrichtung, vertikal oder horizontal verlaufende Schwenkachse (S1, S2) an der Vorrichtung schwenkbar ist.

9. Vorrichtung nach einem der vorhergehenden Ansprüche, **dadurch gekennzeichnet, dass** die Position eines mindestens einen Druckkopf (23) der Druckeinrichtung (D) lagernden Druckmodulgehäuses (20) an der Vorrichtung bezüglich eines ein Getränk beinhaltenden Gefäßes (T) einstellbar ist und/oder die Position eines Trägers (11) der Vorrichtung für ein ein auszugebendes Getränk aufnehmendes Gefäß (T) an der Vorrichtung einstellbar ist.

10. Druckmodul (2) für das Aufdrucken eines Motivs aus für einen Menschen genießbarem Druckmedium auf ein Getränk, das als vormontierte und auf seine bestimmungsgemäße Funktion vorprüfbare Baueinheit an eine Vorrichtung zur Zubereitung und Ausgabe eines Getränks montierbar ist, wobei das Druckmodul (2) ein Druckmodulgehäuse (20), in dem mindestens ein Druckkopf (23) für das Drucken mit dem Druckmedium verstellbar gelagert ist, umfasst, wobei
in dem Druckmodulgehäuse (20) mindestens eine wenigstens eine Ausgabeöffnung bereitstellende Ausgabeeinheit (12, 13) für die Ausgabe des Getränks angeordnet ist und die mindestens eine Ausgabeeinheit (12, 13) in dem Druckmodulgehäuse (20) zwischen einer Ruheposition und einer Ausgabeposition verstellbar ist,
oder
die Vorrichtung (1) ein Ausgabegehäuse (102) umfasst, das wenigstens einen Teil der Ausgabeeinrichtung (A) aufnimmt und an der Vorrichtung (1) zwischen einer Ausgabestellung und einer Parkstellung verstellbar ist, und das Druckmodulgehäuse (20) an einem Vorrichtungsgehäuse (100) der Vorrichtung zwischen einer Ruhestellung und einer Gebrauchsstellung verstellbar und zur mechanischen Kopplung mit dem Ausgabegehäuse (102) derart vorgesehen ist, dass das Ausgabegehäuse (102)
- in seine Ausgabestellung verstellt ist, wenn das Druckmodulgehäuse (20) in seine Ruhestellung verstellt ist, und
- in seine Parkstellung verstellt ist, wenn das Druckmodulgehäuse (20) in seine Gebrauchsstellung verstellt ist.

## Claims

1. Device for dispensing a beverage, comprising at least
- a preparation device (Z) for preparing a beverage,
- a dispensing device (A) with at least one dispensing opening (1210, 1310) for dispensing the beverage, and
- at least one printing device (D), by means of which a beverage dispensed via the dispensing device (A) can be imprinted,
**characterized in that**
the printing device (D) comprises a printing head (23) that is arranged in a printing module housing (20) at least also receiving part of the dispensing device (A), wherein at least one dispensing unit (12, 13) of the dispensing device (A) providing the at least one dispensing opening (1210, 1310) is arranged in the printing module housing (20), and the at least one dispensing unit (12, 13) can be adjusted in the printing module housing (20) between a rest position and a dispensing position,
or
the printing device (D) comprises a printing head (23) that is accommodated in a printing module housing (20), the printing module housing (20) can be adjusted on a device housing (100) of the device between a rest position and a position of use, and the device (1) comprises a dispensing housing (102) that receives at least part of the dispensing device (A) and can be adjusted on the device (1) between a dispensing position and a parking position, wherein the dispensing housing (102)
- is adjusted into its dispensing position when the printing module housing (20) is adjusted into its rest position, and
- is adjusted into its parking position when the printing module housing (20) is adjusted into its position of use.

2. The device according to claim 1, **characterized in that** the printing device (D) comprises at least one translationally and/or rotationally adjustable printing head (23) for imprinting a beverage.

3. The device according to claim 1 or 2, **characterized in that**, when the at least one dispensing unit (12, 13) can be adjusted in the printing module housing (20) between a rest position and a dispensing position, the printing head (23) for imprinting the beverage can be guided past the at least one dispensing unit (12, 13) disposed in its rest position.

4. The device according to claim 3, **characterized in that** in its dispensing position the at least one dispensing unit (12, 13) at least partly protrudes into an adjustment path along which the printing head (23) can be adjusted.

5. The device according to any of the preceding claims, **characterized in that**, when the at least one dispensing unit (12, 13) can be adjusted in the printing module housing (20) between a rest position and a dispensing position, the printing head (23) for imprinting the beverage can be adjusted into a printing position in which the printing head (23) at least partly protrudes into an adjustment path along which the at least one dispensing unit (12, 13) can be adjusted into its dispensing position.

6. The device according to claim 1 or 2, **characterized in that** in its parking position the dispensing housing (102) is at least partly received in a receptacle of a device housing (100) of the device (1).

7. The device according to claim 6, **characterized in that**, when the printing module housing (20) can be adjusted on a device housing (100) of the device between a rest position and a position of use, the printing module housing (20) is non-rotatably coupled to a dispensing housing (102) that receives at least part of the dispensing device (A).

8. The device according to claim 7, **characterized in that** the printing module housing (20) can be pivoted about a vertically or horizontally extending pivot axis (S1, S2) on the device, when the device is properly erected.

9. The device according to any of the preceding claims, **characterized in that** the position of a printing module housing (20) supporting at least one printing head (23) of the printing device (D) can be set on the device with respect to a cup (T) containing a beverage and/or the position of a carrier (11) of the device can be set on the device for a cup (T) receiving a beverage to be dispensed.

10. A printing module (2) for printing a motif from printing medium suitable for human consumption on a beverage, which can be mounted to a device for preparing and dispensing a beverage as a premounted construction unit pretestable for its proper function, wherein the printing module (2) comprises a printing module housing (20) in which at least one printing head (23) for printing with the printing medium is adjustably mounted, wherein in the printing module housing (20) at least one dispensing unit (12, 13) providing at least one dispensing opening is arranged for dispensing the beverage, and the at least one dispensing unit (12, 13) can be adjusted in the printing module housing (20) between a rest position and a dispensing position,
or
the device (1) comprises a dispensing housing (102) that receives at least part of the dispensing device (A) and can be adjusted on the device (1) between a dispensing position and a parking position, and the printing module housing (20) can be adjusted on a device housing (100) of the device between a rest position and a position of use and is provided for mechanical coupling with the dispensing housing (102) in such a way that the dispensing housing (102)
- is adjusted into its dispensing position when the printing module housing (20) is adjusted into its rest position, and
- is adjusted into its parking position when the printing module housing (20) is adjusted into its position of use.

## Revendications

1. Dispositif de distribution d'une boisson, comprenant au moins
- un dispositif de préparation (Z) pour la préparation d'une boisson,
- un dispositif de distribution (A) avec au moins une ouverture de distribution (1210, 1310) pour la distribution de la boisson, et
- au moins un dispositif d'impression (D), avec lequel une boisson distribuée par le dispositif de distribution (A) peut être imprimée,
**caractérisé en ce que**
le dispositif d'impression (D) comprend une tête d'impression (23) qui est agencée dans un boîtier de module d'impression (20) recevant au moins aussi une partie du dispositif de distribution (A), au moins une unité de distribution (12, 13) du dispositif de distribution (A) fournissant l'au moins une ouverture de distribution (1210, 1310) étant agencée dans le boîtier de module d'impression (20), et l'au moins une unité de distribution (12, 13) étant ajustable dans le boîtier de module d'impression (20) entre une position de repos et une position de distribution,
ou
le dispositif d'impression (D) comprend une tête d'impression (23) qui est logée dans un boîtier de module d'impression (20), le boîtier de module d'impression (20) est ajustable sur un boîtier de dispositif (100) du dispositif entre une position de repos et une position d'utilisation, et le dispositif (1) comprend un boîtier de distribution (102) qui reçoit au moins une partie du dispositif de distribution (A) et qui est ajustable sur le dispositif (1) entre une position de distribution et une position de rangement, le boîtier de distribution (102)
- étant ajusté dans sa position de distribution lorsque le boîtier de module d'impression (20) est ajusté dans sa position de repos, et
- étant ajusté dans sa position de rangement lorsque le boîtier de module d'impression (20) est ajusté dans sa position d'utilisation.

2. Dispositif selon la revendication 1, **caractérisé en ce que** le dispositif d'impression (D) comprend au moins une tête d'impression (23) ajustable en translation et/ou en rotation pour l'impression d'une boisson.

3. Dispositif selon la revendication 1 ou 2, **caractérisé en ce que**, lorsque ladite au moins une unité de distribution (12, 13) peut être ajustée dans le boîtier de module d'impression (20) entre une position de repos et une position de distribution, la tête d'impression (23) peut être guidée devant l'au moins une unité de distribution (12, 13) disposée dans sa position de repos, pour imprimer la boisson.

4. Dispositif selon la revendication 3, **caractérisé en ce que** ladite au moins une unité de distribution (12, 13), dans sa position de distribution, fait saillie au moins partiellement dans une course de déplacement le long de laquelle la tête d'impression (23) peut être ajustée.

5. Dispositif selon l'une quelconque des revendications précédentes, **caractérisé en ce que**, lorsque ladite au moins une unité de distribution (12, 13) peut être ajustée dans le boîtier de module d'impression (20) entre une position de repos et une position de distribution, la tête d'impression (23) peut être ajustée pour imprimer la boisson dans une position d'impression dans laquelle la tête d'impression (23) fait saillie au moins partiellement dans une course de déplacement le long de laquelle ladite au moins une unité de distribution (12, 13) peut être ajustée dans sa position de distribution.

6. Dispositif selon la revendication 1 ou 2, **caractérisé en ce que** le boîtier de distribution (102), dans sa position de rangement, est logé au moins partiellement dans un logement d'un boîtier de dispositif (100) du dispositif (1).

7. Dispositif selon la revendication 6, **caractérisé en ce que**, lorsque le boîtier de module d'impression (20) peut être ajusté sur un boîtier de dispositif (100) du dispositif entre une position de repos et une position d'utilisation, le boîtier de module d'impression (20) est couplé d'une manière fixe en rotation à un boîtier de distribution (102) qui reçoit au moins une partie du dispositif de distribution (A).

8. Dispositif selon la revendication 7, **caractérisé en ce que** le boîtier de module d'impression (20) peut pivoter sur le dispositif autour d'un axe de pivotement (S1, S2) s'étendant verticalement ou horizontalement, lorsque le dispositif est installé conformément à sa destination.

9. Dispositif selon l'une quelconque des revendications précédentes, **caractérisé en ce que** la position d'un boîtier de module d'impression (20) supportant au moins une tête d'impression (23) du dispositif d'impression (D) est réglable sur le dispositif par rapport à un récipient (T) contenant une boisson et/ou la position d'un support (11) du dispositif pour un récipient (T) contenant une boisson à distribuer est réglable sur le dispositif.

10. Module d'impression (2) pour l'impression d'un motif à partir d'un fluide d'impression comestible pour un être humain sur une boisson, qui peut être monté sur un dispositif pour la préparation et la distribution d'une boisson comme unité modulaire prémontée et pouvant être pré-testée quant à sa fonction conforme à sa destination, le module d'impression (2) comprenant un boîtier de module d'impression (20), dans lequel au moins une tête d'impression (23) est montée de manière ajustable pour l'impression avec le fluide d'impression, au moins une unité de distribution (12, 13) mettant à disposition au moins une ouverture de distribution étant disposée dans le boîtier de module d'impression (20) pour la distribution de la boisson et ladite au moins une unité de distribution (12, 13) étant ajustable dans le boîtier de module d'impression (20) entre une position de repos et une position de distribution,
ou
le dispositif (1) comprenant un boîtier de distribution (102) qui reçoit au moins une partie du dispositif de distribution (A) et qui est ajustable sur le dispositif (1) entre une position de distribution et une position de rangement, et le boîtier de module d'impression (20) étant ajustable sur un boîtier de dispositif (100) du dispositif entre une position de repos et une position d'utilisation et étant prévu pour le couplage mécanique avec le boîtier de distribution (102) de telle sorte que le boîtier de distribution (102)
- est ajusté dans sa position de distribution lorsque le boîtier de module d'impression (20) est ajusté dans sa position de repos, et
- est ajusté dans sa position de rangement lorsque le boîtier de module d'impression (20) est ajusté dans sa position d'utilisation.
